# EUROPEAN PATENT APPLICATION

(11) **EP 4 052 571 A1**
(43) Date of publication of application: **07.09.2022**
(21) Application number: 21020125.7
(22) Date of filing: 04.03.2021
(51) Int. Cl.: A01K 63/02, C02F 1/72, C02F 103/20

(54) **COLLAPSIBLE AEROBIC CATALYZATION APPARATUS FOR SHIPPING-STORAGE TANK LID INTEGRATION**

(71) Applicant: Westall, Stephen Malcolm, 4270 Åkrehamn (NO); Iles, Robert Anthony, 4005 Stavanger (NO); Kvamme, Olav Magne, 5912 Seim (NO); Dossymbayeva, Zhanar, 4270 Åkrehamn (NO)
(72) Inventor: Westall, Stephen Malcolm, 4270 Åkrehamn (NO); Iles, Robert Anthony, 4005 Stavanger (NO); Kvamme, Olav Magne, 5912 Seim (NO); Dossymbayeva, Zhanar, 4270 Åkrehamn (NO)

(57) **Abstract**

The invention relates to a collapsible method adapted for an apparatus acceptable for integrating into a foldable or shipping/storage container lid, forming an independent aerobic catalyzation conditioning system. The invention forms a physical integrating apparatus unit 1 for conditioning and aerobic biological scrubbing of environmental gaseous liquid at micro level gas bubble sizes. The twin cylindrical perforated membrane chamber catalyzer unit 5 incorporating an inner slotted primary cylindrical surface chamber, supporting a two-phase flow mixing nozzle unit 4 and a balance control valve 5-V, at respective outlet orifice, control the bubble size by maximizing or minimizing the gas or liquid velocity flow streams. The two-phase flow mixing nozzle unit 4 utilizes the motive fluid inlet and outlet orifices for entraining environmental gas through the secondary tangential smaller size orifices 4-3 close to inlet conduit 4-2 second end wall member and dispersed into the peripheral surface of the fluid gas mixing balance reactor chambers 5-2 & 5-4, creating an aerobic pressure bubble environment system for aerobic digestion or microaerophilic process agent in the re-conditioning or degassing of oxygen-poor recirculated liquids.

## Description

### Technical Field

The present invention relates to an embodiment of a Collapsible Aerobic Catalyzation Apparatus for a foldable or collapsible shipping/storage container lid integration, which shall be utilized as an atmospheric pressure aerobic catalyzation transport medium biology conditioning process unit, for the transportation of live fish, live crustaceans, and other living organisms' dependent on treated liquid medium survival. Or, alternatively as a wet scrubber process unit for a simple method to clean exhaust air or exhaust gas and remove toxic or smelling compound.

The present collapsible aerobic catalyzation apparatus invention's integration lid adaption, relates to a singular unit from 250 liters plus liquid volume shipping/storage container tank modules, suitable for the transportation of live fish, live crustaceans, and other living organism's detoxification, subject to treated liquid medium survival.

### Background Art

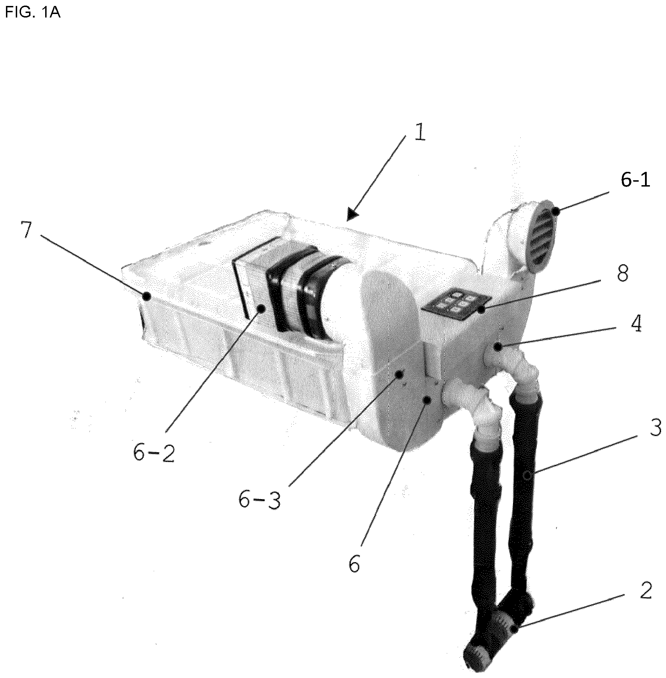

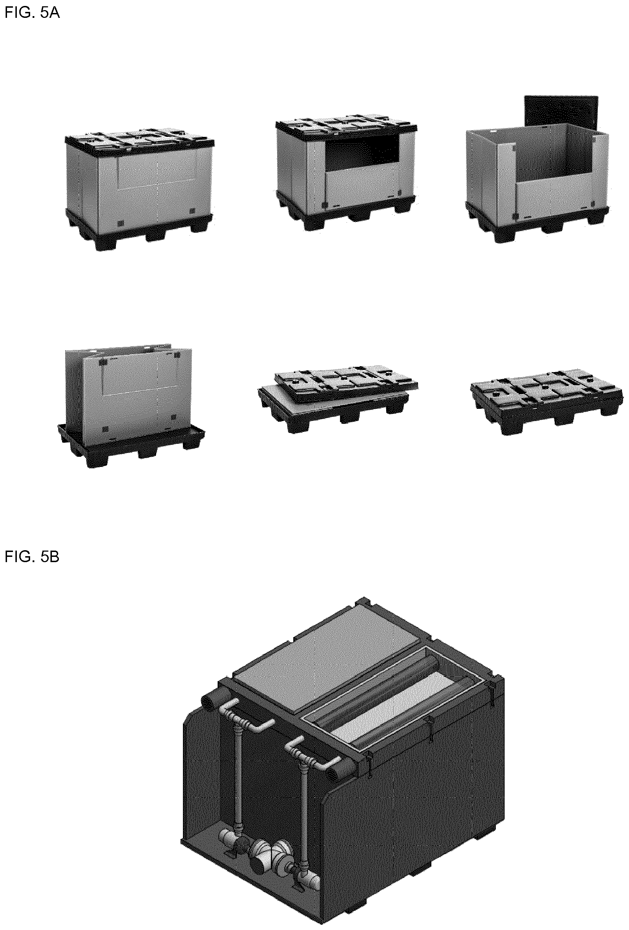

A conventional catalyzation apparatus in the main, pays attention to the various methods of utilizing fine bubbles having a diameter of micrometer level or nanometer level, and various apparatus for generating these fine bubbles. The present apparatus proposed relates to a conventional aerobic catalyzation apparatus adapted in accordance with the prior art defined in Figs. 1A, 1B, 2A, 2B, 3 & 5, to form a collapsible shipping-storage tank lid integrated process unit 1, which can be converted into collapsible storage and returnable units as defined in Figs, 4A & 4B.

### Summary of invention

A conventional aerobic catalyzation apparatus adapted in accordance with the prior art defined in Figs. 1A, 1B, 2A, 2B, 3 & 5 to form a foldable or collapsible shipping-storage tank lid integrated process unit 1, which can then be converted into a collapsible storage and returnable unit as defined in Figs, 4A & 4B.

### Technical Problem

Transportation of living biological masses over distances poses several challenges. The present concept solves a number of these.

Fish and crustacean health are an important element in today's aquaculture industry, with fish and crustacean welfare being a prerequisite for good health and low mortality rates. The ability to withstand stress, bacteria, viruses, and parasites are integral factors.

The patent application present reduces stress in transportation by giving the live fish and crustacean optimal access to natural produced oxygen while removing other natural waste gases by either vaporization or oxidization. By introducing germicidal ultraviolet lighting in the gas ingress phase, the living biomass (the fish or crustacean) is not irradiated. Therefore, overall, the risk of disease transmission during transport or storage duration is considerably reduced, which increases the quality of the product.

It is also possible with the present invention to conduct a natural detoxification process on the living marine organisms during long storage or transportation durations.

The same process can also be conducted with this present invention for purifying grey water and sewage, where the natural nitrogen compounds are removed and utilized as an element in fertilizer production.

The necessary steps, which are essential for artificially and sustaining a creative living conditions for biological growth, are integrated in this simple low-energy apparatus that this patent application deals with.

### Advantageous effect of invention

The invention applied for is technically superior to current known techniques, which in the fresh seafood market are based upon the transportation of chilled or frozen foods, for both fish and shellfish.

The technique presented in this patent application, where we combine the flow of liquid with self-adjusting gas compositions on which living organisms depend, represents an opportunity to transport live fish and shellfish worldwide with a quality equivalent to "straight from the sea". The equipment presented here thus represents a novelty that is important for future sustainability in seafood transport and or the purification of contaminated liquid. This is the main driver of the effects of the invention. In addition, there are significant savings to be gained from lower energy consumption and the ability to offer flexible, more environmentally friendly modes of transport.

Pump unit (2) in combination with the telescopic discharge assembly unit (3) allows for a variable liquid volume fill level in the Shipping-Storage Tank, as the pump liquid submerged level is adaptable via expanding or compressing the telescopic discharge assembly unit (3) length. Therefore, pump cavitation and stable discharge supply pressure problems are easily resolved with this unique telescopic adjustment feature. Further advantages and beneficial effects of the present invention, its cost savings and environmental friendliness, coupled with novelty and inventiveness, will become apparent after a careful reading of the detailed description, with appropriate reference to the accompanying drawings.

### Brief description of drawings

Figs. 1A & 1B: A highly simplified depiction of the complete collapsible aerobic catalyzation process apparatus 1 as per the invention.
Figs. 2A & 2B: A detailed enlargement of assembled components of the two-phase flow mixing nozzle unit 4 and double perforated cylindrical membrane chamber catalyzer 5 located in the expansion tank 7.
Fig. 3: A detailed enlargement of respective component items assembled or located in the environmental gas conditioning unit 6 and LED Switch Panel Slim Touch Control Panel Box 8.
Figs. 4A & 4B: A simplified depiction of the apparatus 1 subassembly's storage and transportation returnable mode's collapsibility invention novelty.
Fig. 5A: Defines a respective foldable or collapsible shipping/storage container, which would be suitable to accommodate a collapsible aerobic catalyzation lid integration apparatus 1 invention, supported with a double skin, food quality, standard plastic water holding lining.
Fig. 5B: Relates to an alternative 3D model sketch with a double train lid integrated apparatus invention option, being supported by a typical conventional shipping-storage tank with an outside pump operating assembly system.

### Description of embodiments

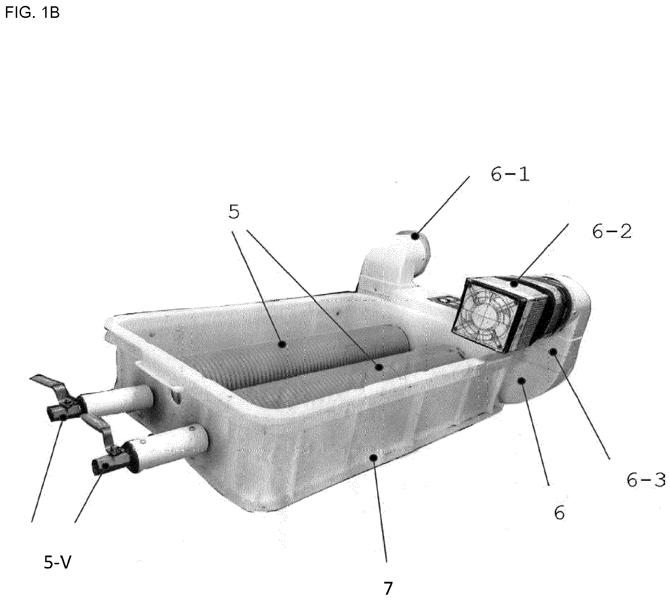

Figs. 1A & 1B are explanatory views of the collapsible aerobic catalyzation apparatus 1, which can be in integrated lid and used as an aerobic catalyzation transport medium biology conditioning process unit in accordance with the present invention's combined components.

The apparatus 1 combines a twin pump unit 2, each complete with telescopic conduit discharge manifold 3, a two-phase flow mixing nozzle unit 4, a double perforated cylindrical membrane chamber catalyzer 5, an environmental gas flow conditioning unit 6, a 12V/24V DC 6 x LED Switch Panel Slim Touch Control Panel Box, including battery power supply unit 8, and an expansion tank 7, which all components are assembled around constituting the shipping-storage tank lid integration's support structure.

Pump unit 2 hangs from the expansion tank's 7 integrated lid assembly and is submerged into the liquid filled supporting shipping-storage tank 9 forming the fluid energy supply to the two-phase flow mixing nozzle unit 4, which entrains and introduces.

The gas-liquid mixed fluid formed in the mixing nozzle unit 4, is purged through union 5-1 and dispersed through the respective inner slotted conduit 5-2 and outer perforated cylindrical catalyzer 5 membrane chambers 5-4, where the aerobic volume infeed, along with associated pressure and temperature, breakdown the concentrated gas in the gas-liquid mixed fluid into finer bubbles.

The defused discharge fine gas-liquid bubbles are dispersed into the expansion tank 7 and digested with the liquid in the shipping-storage tank which the lid is located on. The undissolved gasses (gas vapor) are vented to an alternative location via vent conduit valve V-7. The shipping-storage tank unit 9 acts as a holding station for the transported biology medium.

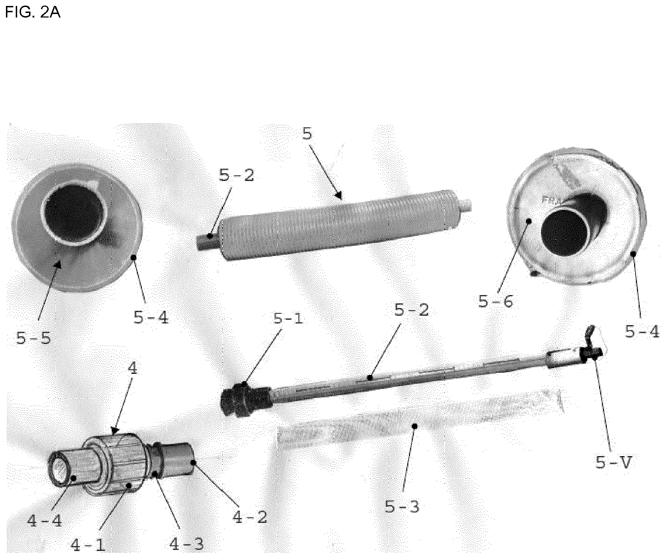

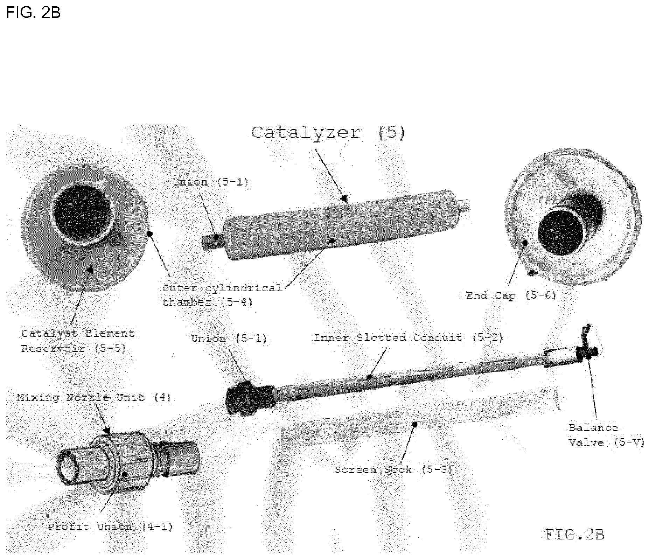

Figs. 2A & 2B is an explanatory view of the two-phase flow mixing nozzle unit 4, which is made up from a pro-fit union housing 4-1, incorporating a motive liquid inlet conduit 4-2 and an adaptor socket nipple, drilled with 1 to 6 tangential environmental gas intake holes 4-3. The liquid inlet conduit 4-2 is connected to telescopic conduit discharge manifold 3, via an adjusted 0-90 degrees bend 3-1 and union 3-2. This conduit assembly unit provides the motive energy supply source to the pro-fit union housing 4-1, allowing for the entraining of gas via tangential intake holes 4-3 from the environmental gas conditioning unit 6.

The entrained environmental gas, combined with the motive liquid, is then dispersed from the pro-fit union housing delivery conduit 4-4 into the double perforated cylindrical membrane chamber catalyzer 5. The balance control valve 5-V at outlet member end of the inner slotted conduit 5-2, changes the inner slotted conduit 5-2 velocity characteristics, which in turn, changes the shear forces of the bubble liquid turbulent flow and bubble micro size from respective screen sock 5-3 and outer cylindrical membrane chamber 5-4.

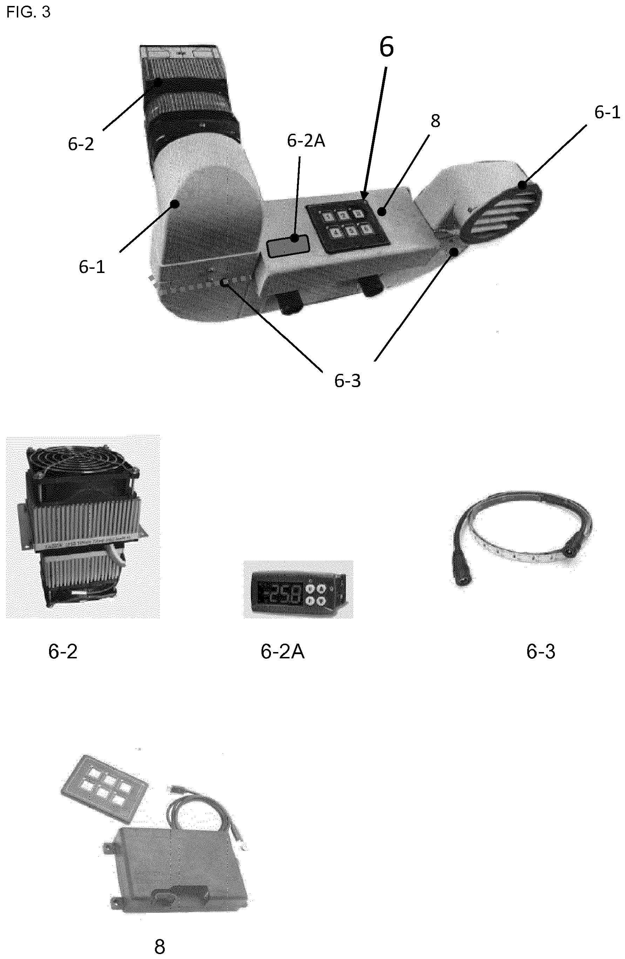

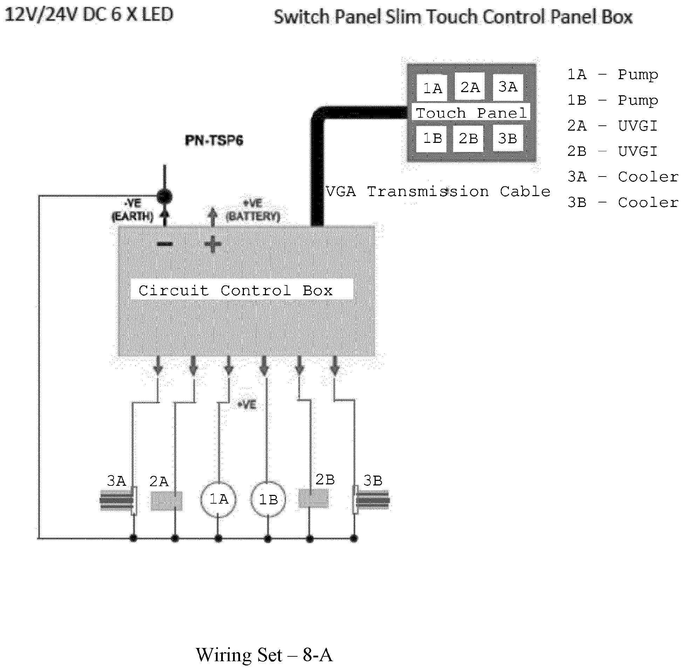

Fig.3 is an explanatory view of the environmental gas conditioning unit 6, which conditions the entrained atmospheric environmental gas passing through the conduit inlet 6-1, either by heating, cooling, and sterilizing, via the respective thermoelectric air conditioner unit 6-2 and LED UV germicidal lamp 6-3, installed inside the environmental gas conditioning unit 6 enclosure, prior to entering the tangential intake holes 4-3.

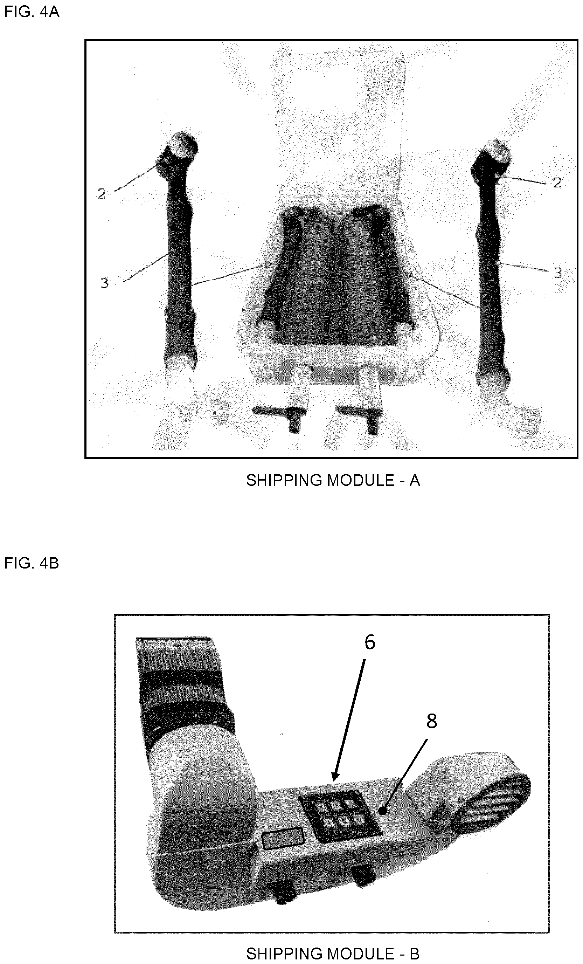

Figs. 4A & 4B defines the aerobic catalyzation apparatus 1 collapsibility function achievement by the simple removal of three subassembly units to form a two pack away shipping module, reducing the total motive operational unit to a one third volume size shipping return concept.

## Claims

1. Is characterised as a Collapsible Aerobic Catalyzation Apparatus where in that the two-phase flow mixing nozzle unit (4) located in the environmental gas conditioning unit (6) utilizes the recirculated liquid flow as the motive energy source via pump unit (2) and telescopic discharge assembly unit (3) to draw in environmental gas composite volumes of nitrogen, oxygen, water vapour, argon, and carbon dioxide to form micro bubble conditions from the double perforated cylindrical membrane chamber catalyzer unit (5) located in the expansion tank (7) constitutes as the collapsible components of the invention.

2. Is characterised as a Collapsible Aerobic Catalyzation Apparatus where in that the two-phase flow mixing nozzle unit (4) and assembly components defined in Fig 3, located in the environmental gas conditioning unit (6), along with the double perforated cylindrical membrane chamber catalyzer unit (5) and expansion tank (7) constitutes as the collapsible integration lid assembly unit of the invention.

3. Where in that the two-phase flow mixing nozzle unit (4) located in the environmental gas conditioning unit (6) utilizes the recirculated liquid flow as the motive energy source via pump unit (2) and telescopic discharge assembly unit (3) to draw in environmental gas composite volumes of nitrogen, oxygen, water vapour, argon, and carbon dioxide to form micro bubble conditions from the double perforated cylindrical membrane chamber catalyzer unit (5) for dispersion or oxidizing in the expansion tank (7) constitutes as a collapsible self-adjusting gas compositions apparatus in the oxygenation of polluted water.

4. Is **characterised in that** pump unit (2) in combination with the telescopic discharge assembly unit (3) constitutes a unique flexible liquid suction supply source for maintaining stable discharge supply pressures.

5. Is **characterised in that** the geometrical size of the apparatus in the sleep mode can be reduced to 1/3 of the size of the operation mode including the lid fold as a protection element. Figs. 4A & 4B clarifies the apparatus 1 collapsibility features, which are achieved by the simple removal of three subassembly units to form a two pack away shipping module, reducing the total motive operational unit to a one third volume size shipping return concept.

6. Is **characterised in that** the apparatus one third volume size shipping return concept can be packed multiple into a foldable container as shown in figure 5 A and shipped as ordinary cargo.

## Amended claims

### Amended claims in accordance with Rule 137(2) EPC.

1. Is characterised as a two-part shipping module embodiment Collapsible Aerobic Catalyzation Apparatus suitable for integrating into a supplementary foldable or collapsible shipping/storage container lid, forming an atmospheric pressurized aerobic catalyzation transport medium biology process conditioning device for the transportation of live fish, live crustaceans, and other living organisms' dependent on treated liquid medium survival. Or, alternatively as a wet scrubber process unit for a simple method to clean exhaust air or exhaust gas and remove toxic or smelling compound.

2. Is characterised as a Collapsible Aerobic Catalyzation Apparatus where in that the two-phase flow mixing nozzle unit and implemented assembly design component configuration constitutes as a collapsible integration lid assembly for an atmospheric pressurized aerobic catalyzation transport medium biology process conditioning device for the transportation of live fish, live crustaceans, and other living organisms' dependent on treated liquid medium survival.

3. Is characterised as a Collapsible Aerobic Catalyzation Apparatus where in that the two-phase flow mixing nozzle unit located in the environmental gas conditioning unit, utilizes the recirculation pump liquid flow as the motive energy source to draw in composite volumes of environmental gases at 101.3 kPa standard atmospheric pressure conditions to produce the micro bubble conditions formed in the double perforated cylindrical membrane chamber catalyzer element for dispersion or oxidizing in the expansion tank constitutes as a self-balancing integration lid assembly for an atmospheric pressurized aerobic catalyzation transport medium biology process conditioning device for the transportation of live fish, live crustaceans, and other living organisms' dependent on treated liquid medium survival.

4. Is characterised as a two-part shipping module embodiment Collapsible Aerobic Catalyzation Apparatus suitable for integrating into a supplementary foldable or collapsible shipping/storage container lid, constituting a unique telescopic pump suction and discharge assembly unit for maintaining stable suction and discharge supply pressures, for use in the atmospheric pressurized aerobic catalyzation transport medium biology process conditioning device for the transportation of live fish, live crustaceans, and other living organisms' dependent on treated liquid medium survival. Or, alternatively as a wet scrubber process unit for a simple method to clean exhaust air or exhaust gas and remove toxic or smelling compound.

5. Is **characterised in that** the defined geometrical sleep mode of the two-part shipping module embodiment Collapsible Aerobic Catalyzation Apparatus suitable for integrating into a supplementary foldable or collapsible shipping/storage container's lid can be reduced to 1/3 of the size of the full process apparatus operation mode, including the defined lid fold and shipping/storage elements, constitutes a two-part pack away shipping module subassembly unit, which, in turn, reducing the total motive operational unit to a one third volume size shipping return concept.
